# EUROPÄISCHE PATENTSCHRIFT

(11) **EP 3 883 820 B1**
(45) Veröffentlichungstag und Bekanntmachung des Hinweises auf die Patenterteilung: **10.01.2024**
(21) Anmeldenummer: 19809021.9
(22) Anmeldetag: 19.11.2019
(51) Int. Cl.: B60R 21/201, B60R 21/2338

(54) **GASSACKMODUL FÜR EIN KRAFTFAHRZEUG**
AIRBAG MODULE FOR A MOTOR VEHICLE
MODULE AIRBAG POUR UN VÉHICULE AUTOMOBILE

(30) Priorität: 19.11.2018 DE 202018106544 U
(43) Veröffentlichungstag der Anmeldung: 29.09.2021
(73) Patentinhaber: Dalphi Metal España, S.A., 36213 Vigo (ES); Safelife Industria de Componentes de Seguranca Automovel S.A., 4990-645 Gemieira (PT)
(72) Erfinder: FERNANDES OLIVEIRA, José, Miguel, 4730-083 Vila Verde - Braga (PT); SANTÍN NAVARRO, Pedro, José, 36204 Vigo (ES)
(74) Vertreter: ZF Patentabteilung - DIPS
(86) Internationale Anmeldenummer: PCT/EP2019/081823
(87) Internationale Veröffentlichungsnummer: WO 2020/104470

(56) Entgegenhaltungen:
- DE-A1-102008 051 594
- DE-A1-102011 076 056
- US-A1- 2007 126 214

## Beschreibung

Die Erfindung betrifft ein Gassackmodul für ein Kraftfahrzeug, mit den Merkmalen im Oberbegriff der Ansprüche 1 und 2.

Gassäcke, insbesondere solche zum Zurückhalten von Fahrzeuginsassen, müssen in ihrem entfalteten, aufgeblasenen Zustand im Fahrzeuginnenraum relativ zum Fahrzeug eine definierte Position einnehmen, um einen vorbestimmten Rückhalteeffekt zu erzielen.

Zur Befestigung im Kraftfahrzeug ist bei vielen der bekannten Gassäcke ein Rand ihrer Befüllöffnung an einem Gehäuseteil des Gassackmoduls festgeklemmt. Beispiele für derartige Gassäcke sind Frontairbags für Fahrer und Beifahrer.

Darüber hinaus gibt es jedoch auch Seitenairbags, die beispielsweise als Vorhanggassack ausgeführt sind und nicht nur im Bereich ihrer Befüllöffnung, sondern auch durch langgestreckte, flexible Haltebänder am Kraftfahrzeug fixiert sind. Diese Haltebänder sind sowohl am Gassack als auch am Fahrzeug befestigt, um den Abstand zwischen dem Gassack und dem jeweiligen Verankerungspunkt im Kraftfahrzeug zu überbrücken. Bei einem Unfall wird der Gassack durch diese Haltebänder in seiner gewünschten Position gehalten. Üblicherweise sind die Haltebänder an den A-, B-, C-, und/oder D-Säulen des Kraftfahrzeugs befestigt.

Zur Montage eines Haltebands am Kraftfahrzeug ist gewöhnlich ein Befestigungselement vorgesehen, das am Halteband angebracht ist. Im Stand der Technik sind diese Befestigungselemente zumeist Laschen aus Metallblech. Die Laschen können mit einem hakenartigen Fortsatz und/oder einer Öffnung versehen sein, um die Laschen beispielsweise in eine Öffnung der Fahrzeugkarosserie einzuklinken bzw. mit der Fahrzeugkarosserie zu verschrauben. Ein derart befestigter Gassack ist beispielsweise aus der EP 2 995 513 A1 bekannt.

Nach der Montage des Gassackmoduls an der Fahrzeugkarosserie ist das Halteband noch lose und wird erst bei der Entfaltung des Gassacks gestrafft. Es besteht zumindest die theoretische Möglichkeit, dass das lose herumhängende Halteband etwa beim Anbringen der Fahrzeuginnenverkleidung eingeklemmt werden kann, was später beim Auslösen des Gassackmoduls unter Umständen zu einer unerwünschten Verzögerung oder Beeinträchtigung der Gassackentfaltung führen könnte. Ferner könnte es zu Störungen bei der weiteren Fahrzeugmontage kommen, wenn beispielsweise ein Monteur oder Montageroboter am losen Bandabschnitt des Gassackmoduls hängen bliebe.

Die DE 10 2011 076 056 A1 zeigt bereits ein Gassackmodul, bei dem ein Anbindungsband des Gassacks mit Hilfe einer Umlenkvorrichtung so geführt wird, dass eine wirksame Länge des Anbindungsbands im eingebauten, aber nichtentfalteten Zustand des Gassackpakets verkürzt ist, um ein Durchhängen des Anbindungsbands zwischen dem Gassackpaket und einer Haltestruktur zu vermeiden.

Ferner ist aus der US 2007/0126214 A1 ein Vorhanggassack mit den Merkmalen im Oberbegriff der Ansprüche 1 und 2 bekannt, der in seinem gefalteten Zustand in einem Gewebegehäuse untergebracht ist, wobei sich ein Halteband des Gassacks durch eine seitliche Gewebeöffnung nach außerhalb des Gewebegehäuses erstreckt.

Aufgabe der Erfindung ist daher die Bereitstellung eines Gassackmoduls, bei dem mit geringem Aufwand eine besonders zuverlässige, rasche und vordefinierte Gassackentfaltung sichergestellt ist.

Erfindungsgemäß wird diese Aufgabe gelöst durch ein Gassackmodul mit den Merkmalen der Ansprüche 1 oder 2. Neben der Fixierung des gefalteten Gassacks dient die Montagehülle hier folglich auch der Positionierung und Lagesicherung des Haltebands, sodass außerhalb des Gassackmoduls keine frei herumhängenden, losen Bandabschnitte mehr vorhanden sind.

Das Halteband ist vorzugsweise ein Textilband, insbesondere ein Gewebeband, wodurch sich das Halteband bei hoher Zugfestigkeit preiswert herstellen und durch Vernähen mit geringem Aufwand am Gassack befestigen lässt. Bevorzugt ist der Gassack ebenfalls aus einem Gewebe gefertigt, wobei alternativ jedoch auch andere Ausführungen, zum Beispiel aus Kunststofffolie denkbar wären.

In einer Ausführungsform des Gassackmoduls ist das Halteband separat ausgeführt und am ersten Bandende mit dem Gassack verbunden, insbesondere vernäht. Alternativ wäre jedoch auch denkbar, dass das Halteband als Gassackfortsatz ausgeführt ist, sodass der Gassack am ersten Bandende einstückig in das Halteband übergeht.

Erfindungsgemäß ist das Halteband im entfalteten, aufgeblasenen Zustand des Gassacks zwischen dem ersten Bandende und dem Befestigungselement über seine freie Bandlänge langgestreckt gespannt, wobei das Halteband im gefalteten Zustand des Gassacks so mit der Montagehülle verbunden oder in der Montagehülle aufgenommen ist, dass es zur Verkürzung der freien Bandlänge wenigstens einmal umgeschlagen oder gefaltet ist.

Gemäß einer bevorzugten Ausführungsform des Gassackmoduls ist der Gassack ein Vorhanggassack, insbesondere ein Vorhang-Seitengassack. Derartige Gassackmodule sind besonders groß und weisen häufig besonders lange Haltebänder auf, sodass lose Bandabschnitte besonders problematisch sind und sich eine Positionierung oder Fixierung des Haltebands im gefalteten Zustand des Gassacks äußerst vorteilhaft auswirkt.

Das Befestigungselement ist bevorzugt eine Blechlasche, insbesondere ein Biegestanzteil aus Stahl.

Die Montagehülle kann aus einem reißbaren Material hergestellt sein und/oder Sollbruchstellen aufweisen, sodass die Montagehülle eine Montagefixierung bereitstellt und bei einer Entfaltung des Gassacks aufreißt. Herkömmliche Montagehüllen aus dünnem Gewebe oder Kunststoff dienen bereits der Montagefixierung des Gassacks und reißen bei dessen Entfaltung auf, sodass sich an der prinzipiellen Beschaffenheit dieser Montagehüllen nichts ändert. Nunmehr wird lediglich beim Aufreißen der Montagehüllen auch das darin aufgenommene oder daran befestigte Halteband freigegeben. Solche Montagehüllen können beispielsweise aus einem langgestreckten Materialstreifen hergestellt sein, dessen Längsränder aufeinandergelegt und durch eine Längsnaht so miteinander verbunden sind, dass ein langgestreckter Montageschlauch entsteht.

Gemäß der Erfindung ist die Montagehülle ein entlang einer Längsachse langgestreckter Montageschlauch, der an wenigstens einem axialen Ende einen Schlauchendabschnitt mit verringertem Schlauchquerschnitt aufweist, wobei das Halteband im gefalteten Zustand des Gassacks vollständig in der Montagehülle aufgenommen ist, wobei sich das zweite Bandende in den Schlauchendabschnitt erstreckt und das übrige Halteband angrenzend an den Schlauchendabschnitt im Montageschlauch aufgenommen ist.

Alternativ oder zusätzlich ist das Befestigungselement mit der Montagehülle verbunden, wobei das Befestigungselement und die Montagehülle korrespondierende Montageöffnungen zur Aufnahme eines Montagebolzens aufweisen, welcher die Montagehülle und das Befestigungselement am Kraftfahrzeug, insbesondere an einer Karosserie des Kraftfahrzeugs, befestigt. Zusätzlich kann sich auch das Befestigungselement, insbesondere ein hakenförmiger Fortsatz des Befestigungselements, durch eine Öffnung in der Montagehülle erstrecken. Dadurch ist auf einfache Weise sichergestellt, dass das (lose) Halteband bis zum Aufreißen der Montagehülle z.B. gefaltet oder zusammengeknüllt in der Montagehülle verbleibt und nicht versehentlich herausgezogen wird.

Gemäß einer weiteren Ausführungsform weist die Montagehülle, konkret deren Umfangswand, eine radiale Öffnung auf, wobei sich das Halteband durch diese Öffnung erstreckt und an deren Öffnungsrand umgelenkt wird. Die Öffnung ist insbesondere so angeordnet, dass durch die Bandumlenkung das Spiel aus dem ursprünglich losen Bandabschnitt genommen wird. Somit ist das Halteband mit minimalem Aufwand in seiner Position weitgehend festgelegt und weist keinen losen Bandabschnitt mehr auf. Insbesondere kann die Montagehülle mehrere Öffnungen aufweisen, durch die das Halteband gefädelt ist. Auf diese Weise entsteht mit relativ geringem Aufwand eine stärkere Verflechtung und folglich eine engere Verbindung zwischen dem Halteband und der Montagehülle.

Weitere Merkmale und Vorteile der Erfindung ergeben sich aus der nachfolgenden Beschreibung bevorzugter Ausführungsformen unter Bezugnahme auf die Zeichnungen. In diesen zeigt:
- Figur 1 eine schematische Schnittansicht eines Gassackmoduls mit einem Gassack in seinem gefalteten Zustand;
- Figur 2 das Gassackmodul gemäß Figur 1 mit dem Gassack in seinem entfalteten, aufgeblasenen Zustand;
- Figur 3 ein Detail eines nicht zur Erfindung gehörigen Gassackmoduls im Bereich eines Haltebands; und
- Figur 4 ein Detail eines erfindungsgemäßen Gassackmoduls im Bereich eines Haltebands gemäß einer Ausführungsform.

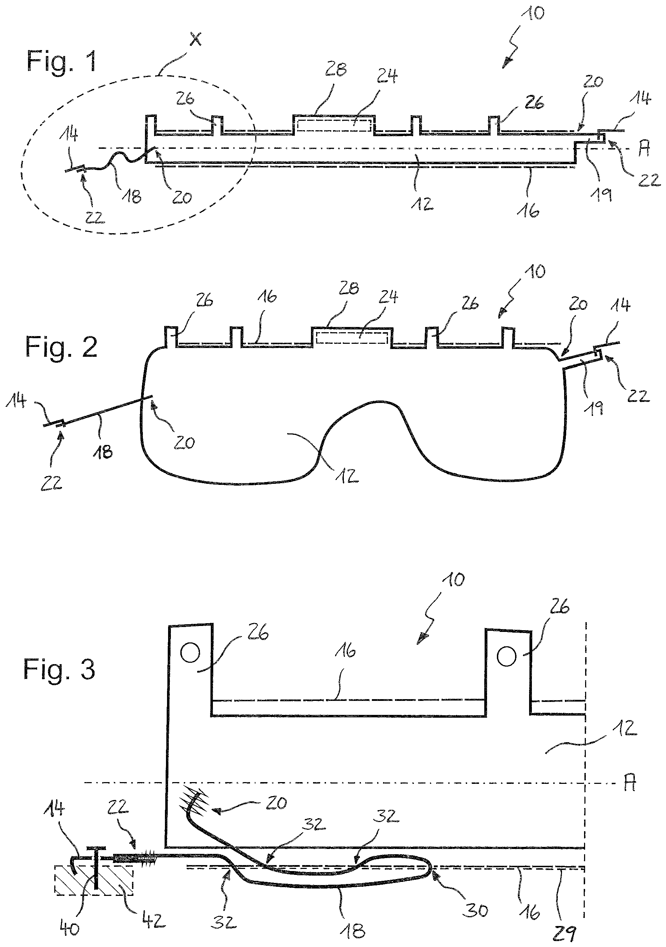

Die Figur 1 zeigt schematisch ein Gassackmodul 10 für ein Kraftfahrzeug, mit einem gefalteten, aufblasbaren Gassack 12, Befestigungselementen 14 zur Montage des Gassacks 12 am Kraftfahrzeug, einer Montagehülle 16, in welcher der gefaltete Gassack 12 aufgenommen und fixiert ist, sowie langgestreckten, flexiblen Haltebändern 18, 19 zur Positionierung des Gassacks 12 in seinem entfalteten, aufgeblasenen Zustand (Figur 2), welche sich jeweils von einem am Gassack 12 befestigten ersten Bandende 20 zu einem entgegengesetzten zweiten Bandende 22 erstrecken, an dem ein Befestigungselement 14 angebracht ist.

Die Figur 2 zeigt das Gassackmodul 10 gemäß Figur 1 nach der Auslösung eines gestrichelt angedeuteten Gasgenerators 24 in einem entfalteten, aufgeblasenen Zustand des Gassacks 12.

Der Gassack 12 weist gemäß den Figuren 1 und 2 an seinem oberen Rand Montagelaschen 26 zur Befestigung am Kraftfahrzeug, insbesondere an einem Dachrahmen des Kraftfahrzeugs auf. Ferner ist am oberen Gassackrand eine Aufnahmetasche 28 für den Gasgenerator 24 vorgesehen, wobei der Gasgenerator 24 vorzugsweise ebenfalls am Dachrahmen des Kraftfahrzeugs befestigt ist. Bei dem dargestellten Gassack 12 handelt es sich folglich um einen Vorhanggassack, konkret um einen Vorhang-Seitengassack für ein Kraftfahrzeug.

Bei diesem Gassacktyp sind üblicherweise vergleichsweise lange Haltebänder 18, 19 zur Positionierung des Gassacks 12 in seinem entfalteten, aufgeblasenen Zustand vorgesehen, sodass sich die vorliegende Erfindung besonders vorteilhaft auswirkt. Generell ist die Erfindungsidee jedoch nicht auf Vorhanggassäcke beschränkt, sondern ohne Weiteres auch auf alle andere Gassacktypen mit entsprechenden Haltebändern 18, 19 übertragbar.

Als Haltebänder 18, 19 kommen insbesondere Textilbänder, speziell Gewebebänder zum Einsatz, da diese bei einer Auslösung des Gassackmoduls 10 hohe Belastungen zuverlässig aufnehmen können sowie darüber hinaus auch einfach und preiswert herstellbar sind.

Gemäß den Figuren 1 und 2 ist das Halteband 18 separat ausgeführt und am ersten Bandende 20 mit dem Gassack 12 verbunden, insbesondere vernäht. Hingegen ist das Halteband 19 als Gassackfortsatz ausgeführt, sodass der Gassack 12 am ersten Bandende 20 einstückig in das Halteband 19 übergeht.

Am zweiten Bandende 22 sind die Haltebänder 18, 19 jeweils fest mit einem Befestigungselement 14 verbunden, wobei das Befestigungselement 14 bevorzugt eine robuste Blechlasche und im vorliegenden Ausführungsbeispiel konkret ein einfach und preiswert herstellbares Biegestanzteil aus Stahl ist.

Die Montagehülle 16 des Gassackmoduls 10 ist gemäß Figur 1 ein entlang einer Längsachse A verlaufender, langgestreckter Montageschlauch, der eine Montagefixierung für den gefalteten Gassack 12 bereitstellt. Beispielsweise ist die Montagehülle 16 aus einer Kunststofffolie oder einem dünnen Gewebe gefertigt, wobei das verwendete Material vergleichsweise schnell reißt und/oder Sollbruchstellen 29 aufweist, sodass die Montagehülle 16 bei einer Aktivierung des Gasgenerators 24 rasch aufreißt und eine schnelle Entfaltung des Gassacks 12 ermöglicht.

Nach der Montage des Gassackmoduls 10 am Kraftfahrzeug ist das Halteband 18, 19 lose und kann beim Anbringen einer Fahrzeuginnenverkleidung eingeklemmt werden und/oder die weitere Fahrzeugmontage behindern. Erst nach einer Aktivierung des Gasgenerators 24 zieht sich der Gassack 12 beim Aufblasen in axialer Richtung stark zusammen, sodass das lose Halteband 18, 19 gestrafft und dadurch der Gassack 12 in eine vorbestimmte Rückhalteposition bewegt wird.

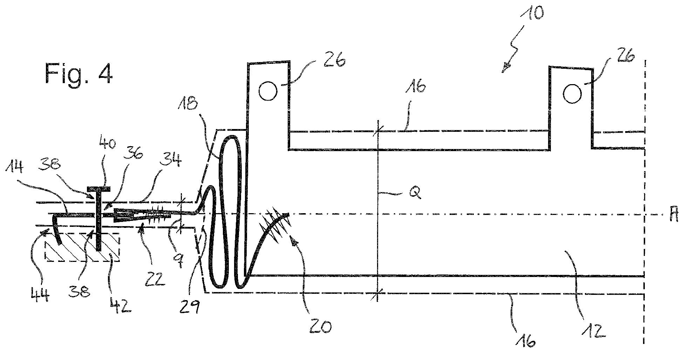

Um unerwünschte, lose Haltebandabschnitte nach der Montage des Gassackmoduls 10 zu vermeiden, zeigen die Figuren 3 und 4 jeweils einen Detailausschnitt X des Gassackmoduls 10 gemäß Figur 1, wobei das Halteband 18 im gefalteten Zustand des Gassacks 12 in der Ausführungsform gemäß Figur 3 mit der Montagehülle 16 verbunden und in der Ausführungsform gemäß Figur 4 vollständig in der Montagehülle 16 aufgenommen ist.

Hierbei kann das Halteband 18 im entfalteten, aufgeblasenen Zustand des Gassacks 12 (Figur 2) zwischen dem ersten Bandende 20 und dem Befestigungselement 14 über seine freie Bandlänge langgestreckt gespannt sein, wohingegen das Halteband 18 im gefalteten Zustand des Gassacks 12 gemäß den Figuren 3 und 4 so mit der Montagehülle 16 verbunden oder in der Montagehülle 16 aufgenommen ist, dass es zur Verkürzung der freien Bandlänge wenigstens einmal umgeschlagen oder gefaltet ist.

In der Ausführungsform des Gassackmoduls 10 gemäß Figur 3 ist das Halteband 18 mit der als Montageschlauch ausgeführten Montagehülle 16 verbunden. Eine Umfangswand des Montageschlauchs weist hierzu eine radiale Öffnung 30 auf, wobei sich das Halteband 18 durch diese Öffnung 30 erstreckt und an deren Öffnungsrand umgelenkt wird. Die Öffnung 30 ist in diesem Fall insbesondere so im Montageschlauch positioniert, dass das Halteband 18 nach der Montage des Gassackmoduls 10 durch die Umlenkung nicht mehr lose herumhängt, aber auch nicht allzu sehr gestrafft ist. Nach einer Auslösung des Gassackmoduls 10 wird das Halteband 18 zuverlässig freigegeben, indem der sich entfaltende Gassack 12 und/oder das sich straffende Halteband 18 den Montageschlauch aufreißt.

Wie in Figur 3 angedeutet, können in der Umfangswand des Montageschlauchs noch weitere Öffnungen 32 vorgesehen sein, durch die das Halteband 18 gefädelt ist. Infolge dieser stärkeren Verflechtung zwischen dem Halteband 18 und der Montagehülle 16 ergibt sich ein besonders geringer Durchhang des Haltebands 18.

In der Ausführungsform gemäß Figur 4 ist die Montagehülle 16 wiederum als langgestreckter Montageschlauch ausgeführt, welcher entlang der Längsachse A verläuft und im Bereich des gefalteten Gassacks 12 einen weitgehend konstanten Schlauchquerschnitt Q aufweist. An wenigstens einem axialen Ende des Montageschlauchs ist ein Schlauchendabschnitt 34 mit verringertem Schlauchquerschnitt q ausgebildet, wobei sich das zweite Bandende 22 des Haltebands 18 in den Schlauchendabschnitt 34, insbesondere durch zumindest einen Teil des Schlauchendabschnitts 34, erstreckt und das übrige Halteband 18 angrenzend an den Schlauchendabschnitt 34 gefaltet im Montageschlauch aufgenommen ist.

Der verringerte Schlauchquerschnitt q kann beispielsweise dadurch hergestellt werden, dass sich die Längsnaht zum axialen Ende des Montageschlauchs hin von den Längsrändern des den Montageschlauch bildenden Materialstreifens entfernt, wodurch sich der Querschnitt Q verringert.

Alternativ lässt sich der verringerte Schlauchquerschnitt q auch durch einfaches oder mehrfaches Aufeinanderlegen bzw. Zusammenfalten des Montageschlauchs realisieren, wobei die Faltung am axialen Ende des Montageschlauchs vorzugsweise im Wesentlichen in Axialrichtung erfolgt. Die Fixierung der Faltung kann durch Vernähen oder Verkleben erfolgen. Im Übrigen ist auch denkbar, dass die Fixierung mittels eines Montagebolzens 40 und einer (in Figur 4 nicht dargestellten) Sicherungsscheibe erfolgt, welche den vormontierten Montagebolzen 40 vor dem Herausrutschen aus Montageöffnungen 36, 38 des Befestigungselements 14 und des Schlauchendabschnitts 34 bewahrt.

Insbesondere kann das Befestigungselement 14 mit der Montagehülle 16 verbunden sein, sodass ein unbeabsichtigtes Herausziehen des Haltebands 18 aus der Montagehülle 16 weitgehend ausgeschlossen ist. Diese Verbindung kann beispielsweise durch Vernähen, Verkleben oder auch mittels Hindurchstecken des Befestigungselements 14 durch die Montagehülle 16 erfolgen.

Im Falle einer solchen Verbindung zwischen dem Befestigungselement 14 und der als Montageschlauch ausgeführten Montagehülle 16 sind auch Ausführungsvarianten des Gassackmoduls 10 denkbar, die einen Montageschlauch mit konstantem Schlauchquerschnitt Q aufweisen. Ein unbeabsichtigtes Herausziehen des Haltebands 18 aus dem Montageschlauch ist in diesem Fall auch ohne einen Schlauchendabschnitt 34 mit verringertem Schlauchquerschnitt q nahezu ausgeschlossen. Dadurch verringert sich in vorteilhafter Weise der Fertigungsaufwand für die Montagehülle 16.

Nach einer Auslösung des Gassackmoduls 10 wird die Montagehülle 16 durch den sich entfaltenden Gassack 12 aufgerissen und gibt folglich auch das aufgenommene Halteband 18 zuverlässig frei.

Das Befestigungselement 14 und die Montagehülle 16 weisen gemäß Figur 4 korrespondierende Montageöffnungen 36, 38 zur Aufnahme eines Montagebolzens 40 auf, wobei der Montagebolzen 40 die Montagehülle 16 und das Befestigungselement 14 an einer Karosserie 42 des Kraftfahrzeugs befestigt.

Ferner erstreckt sich in dem dargestellten Ausführungsbeispiel auch das Befestigungselement 14, genauer ein hakenförmiger Fortsatz des Befestigungselements 14, durch eine Öffnung 44 in der Umfangswand des Montageschlauchs.

Selbstverständlich gelten die obigen Erläuterungen zum Halteband 18 analog auch für das Halteband 19 des Gassackmoduls 10.

## Patentansprüche

1. Gassackmodul für ein Kraftfahrzeug, mit
einem gefalteten, aufblasbaren Gassack (12),
einem Befestigungselement (14) zur Montage des Gassacks (12) am Kraftfahrzeug,
einer Montagehülle (16), in welcher der gefaltete Gassack (12) aufgenommen und fixiert ist, sowie
einem langgestreckten, flexiblen Halteband (18, 19) zur Positionierung des Gassacks (12) in seinem entfalteten, aufgeblasenen Zustand, welches sich von einem am Gassack (12) befestigten ersten Bandende (20) zu einem entgegengesetzten zweiten Bandende (22) erstreckt, an dem das Befestigungselement (14) angebracht ist,
wobei das Halteband (18, 19) im entfalteten, aufgeblasenen Zustand des Gassacks (12) zwischen dem ersten Bandende (20) und dem Befestigungselement (14) über seine freie Bandlänge langgestreckt gespannt ist, und wobei das Halteband (18, 19) im gefalteten Zustand des Gassacks (12) so mit der Montagehülle (16) verbunden oder in der Montagehülle (16) aufgenommen ist, dass es zur Verkürzung der freien Bandlänge wenigstens einmal umgeschlagen oder gefaltet ist,
wobei das Befestigungselement (14) mit der Montagehülle (16) verbunden ist, **dadurch gekennzeichnet,**
**dass** das Befestigungselement (14) und die Montagehülle (16) korrespondierende Montageöffnungen (36, 38) zur Aufnahme eines Montagebolzens (40) aufweisen, der die Montagehülle (16) und das Befestigungselement (14) am Kraftfahrzeug befestigt.

2. Gassackmodul für ein Kraftfahrzeug, mit
einem gefalteten, aufblasbaren Gassack (12),
einem Befestigungselement (14) zur Montage des Gassacks (12) am Kraftfahrzeug,
einer Montagehülle (16), in welcher der gefaltete Gassack (12) aufgenommen und fixiert ist, sowie
einem langgestreckten, flexiblen Halteband (18, 19) zur Positionierung des Gassacks (12) in seinem entfalteten, aufgeblasenen Zustand, welches sich von einem am Gassack (12) befestigten ersten Bandende (20) zu einem entgegengesetzten zweiten Bandende (22) erstreckt, an dem das Befestigungselement (14) angebracht ist,
wobei das Halteband (18, 19) im entfalteten, aufgeblasenen Zustand des Gassacks (12) zwischen dem ersten Bandende (20) und dem Befestigungselement (14) über seine freie Bandlänge langgestreckt gespannt ist, und wobei das Halteband (18, 19) im gefalteten Zustand des Gassacks (12) so mit der Montagehülle (16) verbunden oder in der Montagehülle (16) aufgenommen ist, dass es zur Verkürzung der freien Bandlänge wenigstens einmal umgeschlagen oder gefaltet ist,
wobei die Montagehülle (16) ein entlang einer Längsachse (A) verlaufender, langgestreckter Montageschlauch mit einem weitgehend konstanten Schlauchquerschnitt (Q) ist, der an wenigstens einem axialen Ende einen Schlauchendabschnitt (34) mit verringertem Schlauchquerschnitt (q) aufweist,
**dadurch gekennzeichnet, dass** das Halteband (18, 19) im gefalteten Zustand des Gassacks (12) vollständig in der Montagehülle (16) aufgenommen ist, wobei sich das zweite Bandende (22) in den Schlauchendabschnitt (34) erstreckt und das übrige Halteband (18, 19) angrenzend an den Schlauchendabschnitt (34) im Montageschlauch aufgenommen ist.

3. Gassackmodul nach Anspruch 1 oder 2, **dadurch gekennzeichnet, dass** das Halteband (18, 19) ein Textilband, insbesondere ein Gewebeband ist.

4. Gassackmodul nach einem der vorhergehenden Ansprüche, **dadurch gekennzeichnet, dass** das Halteband (18) separat ausgeführt und am ersten Bandende (20) mit dem Gassack (12) verbunden, insbesondere vernäht ist.

5. Gassackmodul nach einem der vorhergehenden Ansprüche, **dadurch gekennzeichnet, dass** das Halteband (19) als Gassackfortsatz ausgeführt ist, sodass der Gassack (12) am ersten Bandende (20) einstückig in das Halteband (19) übergeht.

6. Gassackmodul nach einem der vorhergehenden Ansprüche, **dadurch gekennzeichnet, dass** der Gassack (12) ein Vorhanggassack, insbesondere ein Vorhang-Seitengassack ist.

7. Gassackmodul nach einem der vorhergehenden Ansprüche, **dadurch gekennzeichnet, dass** sich das zweite Bandende (22) in den Schlauchendabschnitt (34) erstreckt und das übrige Halteband (18, 19) angrenzend an den Schlauchendabschnitt (34) im Montageschlauch gefaltet aufgenommen ist.

8. Gassackmodul nach einem der vorhergehenden Ansprüche, **dadurch gekennzeichnet, dass** die Montagehülle (16) aus einem reißbaren Material hergestellt ist und/oder Sollbruchstellen (29) aufweist, sodass die Montagehülle (16) eine Montagefixierung bereitstellt und bei einer Entfaltung des Gassacks (12) aufreißt.

9. Gassackmodul nach einem der vorhergehenden Ansprüche,
**dadurch gekennzeichnet, dass** das Befestigungselement (14) mit der Montagehülle (16) so verbunden ist, dass das Halteband (18,19) bis zum Aufreißen der Montagehülle (16) in der Montagehülle (16) verbleibt.

10. Gassackmodul nach einem der vorhergehenden Ansprüche, **dadurch gekennzeichnet, dass** sich das Befestigungselement (14) durch eine Öffnung (44) in der Montagehülle (16) erstreckt.

11. Gassackmodul nach Anspruch 1, **dadurch gekennzeichnet, dass** die Montagehülle (16) eine Öffnung (30) aufweist, wobei sich das Halteband (18, 19) durch die Öffnung (30) erstreckt und/oder an deren Öffnungsrand umgelenkt wird.

12. Gassackmodul nach Anspruch 1, **dadurch gekennzeichnet, dass** die Montagehülle (16) mehrere Öffnungen (30, 32) aufweist, durch welche das Halteband (18, 19) gefädelt ist.

## Claims

1. An airbag module for an automotive vehicle, comprising
a folded, inflatable airbag (12),
a fastening element (14) for mounting the airbag (12) on the vehicle,
a mounting jacket (16) in which the folded airbag (12) is received and fixed, as well as
an elongate flexible holding strap (18, 19) for positioning the airbag (12) in its deployed inflated state, the holding strap extending from a first strap end (20) fastened on the airbag (12) to an opposite second strap end (22) to which the fastening element (14) is attached,
wherein the holding strap (18, 19) in the deployed, inflated state of the airbag (12) is tensioned between the first strap end (20) and the fastening element (14) to be stretched over its free holding strap length, and wherein the holding strap (18, 19) in the folded state of the airbag (12) is connected to the mounting jacket (16) or is received in the mounting jacket (16) so that it is turned over or folded at least once for reducing the free strap length,
wherein the fastening element (14) is connected to the mounting jacket (16), **characterized in that**
the fastening element (14) and the mounting jacket (16) include corresponding mounting holes (36, 38) for receiving a mounting bolt (40) which secures the mounting jacket (16) and the fastening element (14) to the vehicle.

2. An airbag module for an automotive vehicle, comprising
a folded, inflatable airbag (12),
a fastening element (14) for mounting the airbag (12) on the vehicle,
a mounting jacket (16) in which the folded airbag (12) is received and fixed, as well as
an elongate flexible holding strap (18, 19) for positioning the airbag (12) in its deployed inflated state, the holding strap extending from a first strap end (20) fastened on the airbag (12) to an opposite second strap end (22) to which the fastening element (14) is attached,
wherein the holding strap (18, 19) in the deployed, inflated state of the airbag (12) is tensioned between the first strap end (20) and the fastening element (14) to be stretched over its free holding strap length, and wherein the holding strap (18, 19) in the folded state of the airbag (12) is connected to the mounting jacket (16) or is received in the mounting jacket (16) so that it is turned over or folded at least once for reducing the free strap length,
wherein the mounting jacket (16) is an elongate mounting tube extending along a longitudinal axis (A) and having a largely constant tube section (Q) which includes a tube end portion (34) having a reduced tube section (q) at least at one axial end,
**characterized in that** holding strap (18, 19) in the folded state of the airbag (12) is completely received in the mounting jacket (16), wherein the second strap end (22) extends into the tube end portion (34) and the remainder of the holding strap (18, 19) is received inside the mounting jacket (16) adjacent to the tube end portion (34).

3. The airbag module according to claim 1 or 2, **characterized in that** the holding strap (18, 19) is a textile strap, especially a fabric strap.

4. The airbag module according to one of the proceeding claims, **characterized in that** the holding strap (18) is separately configured and is connected, especially stitched, to the airbag (12) at the first strap end (20).

5. The airbag module according to one of the proceeding claims, **characterized in that** the holding strap (19) is in the form of an airbag extension so that the airbag (12) integrally merges into the holding strap (19) at the first strap end (20).

6. The airbag module according to one of the preceding claims, **characterized in that** the airbag (12) is a curtain airbag, especially a curtain side airbag.

7. The airbag module according to one of the preceding claims, **characterized in that** the second strap end (22) extends into the tube end portion (34) and the remaining holding strap (18, 19) is received in the mounting tube adjacent to the tube end portion (34).

8. The airbag module according to one of the preceding claims, **characterized in that** the mounting jacket (16) is made from tearable material and/or has predetermined breaking points (29) so that the mounting jacket (16) provides a mounting fixation and tears upon deployment of the airbag (12).

9. The airbag module according to one of the preceding claims, **characterized in that** the fastening element (14) is connected to the mounting jacket (16) such that holding strap (18, 19) remains in the mounting tube (16) until the mounting tube (16) tears open.

10. The airbag module according to one of the proceeding claims , **characterized in that** the fastening element (14) extends through an opening (44) in the mounting jacket (16).

11. The airbag module according to claim 1, **characterized in that** the mounting jacket (16) includes an opening (30), with the holding strap (18, 19) extending through the opening (30) and/or being diverted at the opening edge thereof.

12. The airbag module according to claim 1, **characterized in that** the mounting jacket (16) has plural openings (30, 32) through which the holding strap (18, 19) is threaded.

## Revendications

1. Module airbag pour un véhicule automobile, comprenant
un coussin gonflable (12) plié,
un élément de fixation (14) pour le montage du coussin gonflable (12) sur le véhicule automobile,
une enveloppe de montage (16) dans laquelle le coussin gonflable plié (12) est reçu et fixé, ainsi que
une sangle de maintien (18, 19) allongée et flexible pour le positionnement du coussin gonflable (12) dans son état déplié et gonflé, qui s'étend d'une première extrémité de sangle (20) fixée au coussin gonflable (12) à une deuxième extrémité de sangle (22) opposée, sur laquelle est monté l'élément de fixation (14),
pour lequel la sangle de retenue (18, 19) est tendue en longueur à l'état déplié et gonflé du coussin gonflable (12), sur sa longueur libre entre la première extrémité de sangle (20) et l'élément de fixation (14), et pour lequel la sangle de retenue (18, 19) est, à l'état plié du coussin gonflable (12), reliée à l'enveloppe de montage (16) ou logée dans l'enveloppe de montage (16) de telle sorte qu'elle est rabattue ou pliée au moins une fois pour raccourcir la longueur libre de la sangle,
pour lequel l'élément de fixation (14) est relié à l'enveloppe de montage (16), **caractérisé en ce que**
l'élément de fixation (14) et l'enveloppe de montage (16) présentent des ouvertures de montage (36, 38) correspondantes pour recevoir un boulon de montage (40) lequel fixe l'enveloppe de montage (16) et l'élément de fixation (14) au véhicule automobile.

2. Module airbag pour un véhicule automobile, comprenant
un coussin gonflable (12) plié,
un élément de fixation (14) pour le montage du coussin gonflable (12) sur le véhicule automobile,
une enveloppe de montage (16) dans laquelle le coussin gonflable plié (12) est reçu et fixé, ainsi que
une sangle de retenue (18, 19) allongée et flexible pour le positionnement du coussin gonflable (12) dans son état déplié et gonflé, lequel s'étend d'une première extrémité de sangle (20) fixée au coussin gonflable (12) à une deuxième extrémité de sangle (22) opposée, sur laquelle est monté l'élément de fixation (14),
pour laquelle la sangle de retenue (18, 19) est, à l'état déployé et gonflé du coussin gonflable (12), tendue dans sa longueur sur sa longueur libre entre la première extrémité de sangle (20) et l'élément de fixation (14), et pour lequel la sangle de retenue (18, 19) est, à l'état plié du coussin gonflable (12), reliée à l'enveloppe de montage (16) ou logée dans l'enveloppe de montage (16) de telle sorte qu'elle est rabattue ou pliée au moins une fois pour raccourcir la longueur libre de la sangle,
pour laquelle l'enveloppe de montage (16) est un tuyau de montage allongé s'étendant le long d'un axe longitudinal (A) avec une section transversale de tuyau (Q) majoritairement constante, qui présente à au moins une extrémité axiale une section d'extrémité de tuyau (34) avec une section transversale de tuyau (q) réduite,
**caractérisé en ce que** la sangle de retenue (18, 19) est entièrement logée dans l'enveloppe de montage (16) à l'état plié du coussin gonflable (12), pour lequel la deuxième extrémité de sangle (22) s'étend dans la section d'extrémité de tuyau (34) et la sangle de retenue restante (18, 19) est logée dans le tuyau de montage de manière adjacente à la section d'extrémité de tuyau (34).

3. Module airbag selon la revendication 1 ou 2, **caractérisé en ce que** la sangle de retenue (18, 19) est une sangle textile, en particulier une sangle de tissu.

4. Module airbag selon l'une des revendications précédentes, **caractérisé en ce que** la sangle de retenue (18) est réalisée séparément et est reliée, en particulier cousue, au coussin gonflable (12) à la première extrémité de la sangle (20).

5. Module airbag selon l'une des revendications précédentes, **caractérisé en ce que** la sangle de retenue (19) est réalisée sous forme de prolongement du coussin gonflable, de sorte que le coussin gonflable (12) se transforme en une seule pièce dans la sangle de retenue (19) à la première extrémité de sangle (20).

6. Module airbag selon l'une des revendications précédentes, **caractérisé en ce que** le coussin gonflable (12) est un coussin gonflable de type rideau, en particulier un coussin gonflable latéral de type rideau.

7. Module airbag selon l'une des revendications précédentes, **caractérisé en ce que** la deuxième extrémité de sangle (22) s'étend dans la section d'extrémité de tuyau (34) et **en ce que** le reste de la sangle de retenue (18, 19) est logé plié dans le tuyau de montage de manière adjacente à la section d'extrémité de tuyau (34).

8. Module airbag selon l'une des revendications précédentes, **caractérisé en ce que** l'enveloppe de montage (16) est fabriquée dans un matériau déchirable et/ou présente des points destinés à la rupture (29), de sorte que l'enveloppe de montage (16) fournit une fixation de montage et se déchire lors d'un déploiement du coussin gonflable (12).

9. Module airbag selon l'une des revendications précédentes,
**caractérisé en ce que** l'élément de fixation (14) est relié à l'enveloppe de montage (16) de telle sorte que la sangle de retenue (18, 19) reste dans l'enveloppe de montage (16) jusqu'à ce que l'enveloppe de montage (16) soit déchirée.

10. Module airbag selon l'une des revendications précédentes, **caractérisé en ce que** l'élément de fixation (14) s'étend à travers une ouverture (44) dans l'enveloppe de montage (16).

11. Module airbag selon la revendication 1, **caractérisé en ce que** l'enveloppe de montage (16) présente une ouverture (30), pour lequel la sangle de retenue (18, 19) s'étend à travers l'ouverture (30) et/ou est coudée au bord d'ouverture.

12. Module airbag selon la revendication 1, **caractérisé en ce que** l'enveloppe de montage (16) présente plusieurs ouvertures (30, 32) à travers lesquelles la sangle de retenue (18, 19) est enfilée.
